# FASCICULE DE BREVET EUROPEEN

(11) **EP 2 792 966 B1**
(45) Date de publication et mention de la délivrance du brevet: **04.01.2017**
(21) Numéro de dépôt: 14164667.9
(22) Date de dépôt: 15.04.2014
(51) Int. Cl.: F24H 8/00, F24H 9/14, F24D 12/02

(54) **Condenseur pour chaudière à condensation à double retour**
Kondensator für Kondensationsheizkessel mit doppelter Rückführung
Condenser for condensing boiler with double return

(30) Priorité: 18.04.2013 FR 1353535
(43) Date de publication de la demande: 22.10.2014
(73) Titulaire: Guillot Industrie, 01190 Pont de Vaux (FR)
(72) Inventeur: Chapuis, David, 01310 Confrancon (FR); Renard, Jérôme, 71000 Macon (FR)
(74) Mandataire: Petit, Maxime

(56) Documents cités:
- EP-A1- 2 093 503
- EP-A1- 2 131 131
- US-A1- 2008 006 226
- US-A1- 2008 061 160

## Description

L'invention concerne une chaudière à condensation à double retour, à savoir une chaudière comprenant un retour d'eau à basse température et un retour d'eau à haute température.

Les chaudières à condensation à double retour connues, communément appelées chaudières à «trois piquages », réalisent un échange thermique entre un fluide caloporteur qui sera désigné de façon générique dans le présent document par 'eau', tel que de l'eau ou un mélange d'eau et d'éthylène glycol, circulant dans un circuit et les fumées produites par la combustion d'un combustible solide, liquide ou gazeux dans le brûleur de la chaudière. Afin d'optimiser les performances d'une telle chaudière, l'échangeur de chaleur comprend deux parties permettant de dissocier le circuit des retours d'eau selon leur température (retour d'eau à basse température RBT et retour d'eau à haute température RHT). La première partie de l'échangeur, correspondant à un échangeur principal, est située en amont de la circulation des fumées, et de ce fait récupère la majeure partie de l'énergie calorifique des fumées. Après cette première étape d'échange, les fumées sont significativement refroidies mais peuvent permettre une seconde étape d'échange thermique dans la seconde partie de l'échangeur correspondant à un condenseur. A cet effet, le retour d'eau à basse température RBT est utilisé dans la seconde partie pour poursuivre l'échange thermique et condenser la vapeur d'eau contenue dans les fumées. En effet, en présence de retour d'eau à basse température, le condenseur est irrigué et l'eau circulant dans celui-ci récupère les calories et condense la vapeur d'eau des fumées. L'eau réchauffée est entrainée par le flux vers l'ouverture de sortie du condenseur où son réchauffement sera complété dans la première étape d'échange.

Par exemple, le document EP2093503 décrit une chaudière à triple piquage comprenant un retour d'eau à basse température reliée à une boite à eau inférieure d'un condenseur et un retour d'eau à haute température reliée à une boite à eau supérieure. Le condenseur comprend en outre des tubes dont l'extrémité inférieure débouche dans la boite à eau inférieure et dont l'extrémité supérieure des tubes débouche dans la boite à eau supérieure.

Mais l'un des inconvénients d'un tel échangeur de chaleur réside en ce qu'en l'absence de retour d'eau à basse température, par exemple en été, lorsque le circuit de chauffage est arrêté, l'eau du circuit basse température stagne dans la seconde partie de l'échangeur. Or lorsque la chaudière fonctionne, par exemple pour la production d'eau chaude sanitaire, les fumées qui échangent avec cette eau stagnante peuvent présenter une température telle que l'eau peut entrer en ébullition. Il existe alors un risque de surchauffe dans le condenseur qui peut ainsi être endommagé de façon irréversible par contraintes thermiques et ou par entartrage.

Une solution connue consiste à insérer une dérivation permanente entre le circuit à retour d'eau à basse température RBT et le circuit de retour d'eau à haute température RHT en amont de la connexion avec le condenseur. Mais la condensation est limitée et les performances de l'échangeur de chaleur sont amoindries. Une vanne à la place de la dérivation pourrait être utilisée, mais elle nécessite l'intervention de l'exploitant ou d'être automatisée ce qui augmente singulièrement le coût de l'échangeur de chaleur.

Un des buts de la présente invention vise à pallier au moins un inconvénient précité. A cet effet, l'invention propose une chaudière à condensation comprenant au moins un retour d'eau à basse température RBT, au moins un retour d'eau à haute température RHT et un dispositif d'échange de chaleur comportant
- un échangeur thermique, et
- un condenseur comportant une boite à eau inférieure, une boite à eau, et des tubes permettant la circulation de l'eau, chaque tube comprenant :
   - une extrémité inférieure débouchant dans la boite à eau inférieure, ladite boite à eau inférieure étant reliée fluidiquement au retour d'eau à basse température RBT, et
   - une extrémité supérieure débouchant dans la boite à eau supérieure, ladite boite à eau supérieure comportant une ouverture d'entrée reliée fluidiquement au retour d'eau à haute température RHT et une ouverture de sortie reliée fluidiquement à une entrée d'eau de l'échangeur thermique de la chaudière.

Cet agencement permet, lors du fonctionnement de la chaudière sans retour d'eau à basse température, de créer une convection naturelle de l'eau des tubes réchauffée avec les fumées, vers les extrémités supérieures des tubes de sorte à déboucher dans la boite à eau supérieure.

Ainsi, la chaudière est configurée de sorte que l'eau provenant du retour d'eau à haute température et circulant dans la boite à eau supérieure entre l'ouverture d'entrée et l'ouverture de sortie, entraine l'eau provenant des extrémités supérieures des tubes.

A l'inverse, une partie de l'eau du retour RHT, qui est plus fraiche que l'eau des tubes ayant été réchauffée dans la seconde étape d'échange, suit un mouvement descendant vers les extrémités inférieures des tubes. Ce mouvement lié à une différence de température entre l'eau du RHT et l'eau contenue dans les tubes permet d'assurer une circulation d'eau dans ces derniers, même lorsque le retour de l'eau à basse température n'est pas alimenté. Ainsi, un phénomène de circulation naturelle continue, se met en place dans le condenseur tant que l'eau du circuit haute température est plus froide que l'eau contenue dans les tubes. Cette circulation prévient alors les risques de surchauffe dans le condenseur et limite son entartrage.

Avantageusement, l'ouverture d'entrée et l'ouverture de sortie sont ménagées respectivement dans une première paroi latérale et une seconde paroi latérale de la boite à eau supérieure, la seconde paroi latérale étant opposée et parallèle à la première paroi latérale et l'ouverture d'entrée et l'ouverture de sortie étant arrangées de façon à ce que l'axe normal à l'ouverture d'entrée est parallèle à l'axe normal à l'ouverture de sortie. Cet agencement des ouvertures permet un mouvement régulier de l'eau qui balaie ainsi de façon homogène la boite à eau supérieure.

De préférence, l'ouverture de sortie présente des dimensions plus importantes que celles de l'ouverture d'entrée. Ceci permet de faciliter l'écoulement de l'eau et d'éviter la formation de zones de surpression dans la boite à eau supérieure. Ainsi, la présente invention permet également un fonctionnement optimal lorsque le retour d'eau à basse température irrigue le condenseur car ces dimensions, conjointement avec le positionnement de l'ouverture d'entrée et l'ouverture de sortie en face à face, évitent la formation d'un effet de thermosiphon avec l'eau arrivant du retour à RHT, et donc garanti une température d'eau la plus basse dans le condenseur, ce qui favorise la condensation.

De préférence, l'axe longitudinal de chaque tube s'étend avec une inclinaison comprise entre 15° et 90° par rapport à l'horizontale. Ainsi le phénomène de convection entrainant les mouvements ascendant et descendant de l'eau dans les tubes est amélioré. Par ailleurs, cette inclinaison permet d'aligner le retour d'eau à haute température, l'ouverture d'entrée et l'ouverture de sortie sans gêner la sortie et la récupération des fumées sous jacente. Le balayage de l'eau est alors amélioré et le condenseur étant simplifié, il est moins onéreux à fabriquer.

De préférence, la chaudière à condensation comprend un bruleur et le condenseur est disposé en aval de l'échangeur thermique par rapport au sens d'écoulement des fumées générées dans le brûleur de ladite chaudière.

Autrement dit, la chaudière à condensation comprend un bruleur générant des fumées traversant la chaudière dans une direction d'écoulement allant de l'échangeur thermique vers le condenseur.

Avantageusement, l'axe longitudinal de chaque tube s'étend transversalement à la direction d'écoulement des fumées (axe x). Cette configuration permet d'atteindre une compacité optimale du dispositif d'échange.

De préférence, l'ouverture de sortie d'eau est disposée dans la partie supérieure de l'échangeur. Ceci favorise le mouvement de l'eau en provenance des tubes, qui est donc réchauffée, vers l'échangeur. La chaleur de l'eau des tubes est ainsi transmise de façon totalement passive sous forme d'énergie thermique à l'échangeur, qui est donc plus économique.

Ainsi, cette configuration de chaudière est non seulement économique de part l'énergie récupérée par la circulation de l'eau dans le condenseur en absence d'eau de retour RBT mais permet également d'éviter l'endommagement du condenseur par un système complètement passif fondé sur un phénomène de convection naturelle.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 illustre une vue schématique crevée en perspective d'un condenseur et d'un échangeur d'une chaudière selon un mode de réalisation de l'invention.
La figure 2 illustre une vue schématique crevée, partielle d'une chaudière dotée d'un dispositif d'échange de chaleur selon une variante de réalisation de l'invention.
La figure 3 illustre une vue schématique d'une face latérale d'un dispositif d'échange d'une chaudière selon cette variante de réalisation de l'invention.

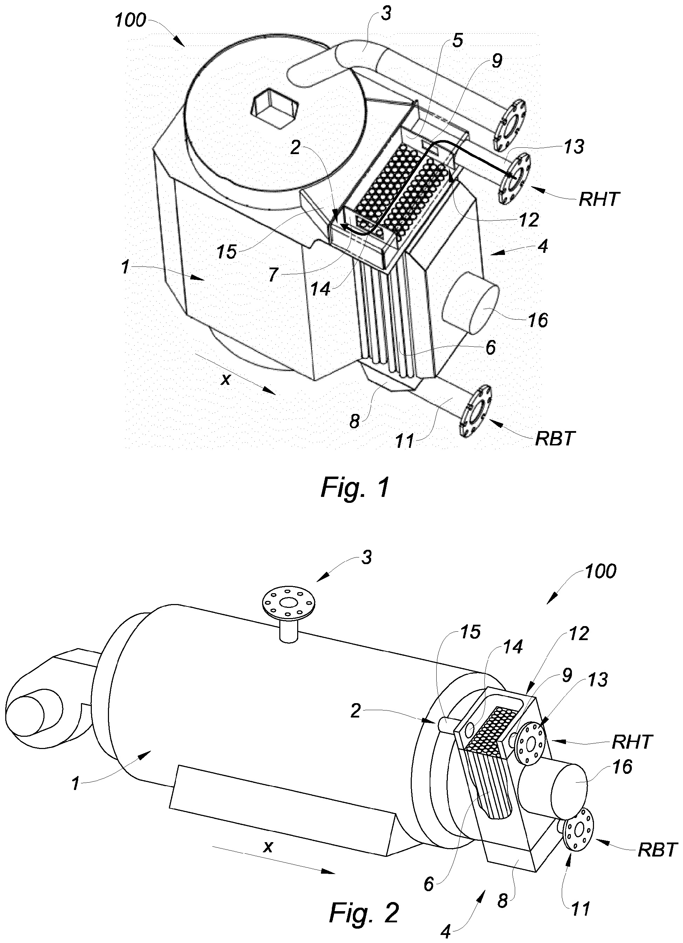

La figure 1 illustre un dispositif d'échange 100 thermique, dans une chaudière à condensation à double retour, c'est-à-dire une chaudière comprenant un retour d'eau à haute température RHT et un retour d'eau à basse température RBT. Ce dispositif d'échange 100 permet un échange thermique entre les fumées générées par un brûleur de la chaudière et de l'eau circulant dans le dispositif d'échange 100. Le dispositif d'échange 100 de l'invention est divisé en deux parties. Dans une première partie, le dispositif d'échange 100 comprend un échangeur 1 présentant un premier circuit d'échange comportant une ouverture d'entrée d'eau 2 dans la partie supérieure de l'échangeur 1 et un raccord relié au départ d'eau 3 de la chaudière. Dans la seconde partie, le dispositif 100 comprend un condenseur 4 comprenant un second circuit d'eau ; le second circuit d'eau étant connecté à l'ouverture d'entrée d'eau 2 du premier circuit d'échange et étant connecté aux canalisations du retour d'eau à basse température RBT et de retour d'eau à haute température RHT.

Dans cette configuration du dispositif d'échange 100, l'échangeur 1 est en amont du condenseur 4 par rapport au sens d'écoulement des fumées (axe x sur la figure 1). L'échangeur 1 reçoit alors les fumées les plus chaudes, ce qui permet une première étape d'échange thermique avec le premier circuit d'échange. Le condenseur 4 en aval permet la seconde étape d'échange thermique entre les fumées, significativement refroidies lors de la première étape d'échange, et l'eau du second circuit d'échange par refroidissement des fumées et condensation de la vapeur d'eau contenue dans les fumées.

Comme illustré à la figure 1, le second circuit d'échange du condenseur 4 comprend des tubes 6 adaptés à la circulation de l'eau, provenant notamment du RBT. Lors du fonctionnement de la chaudière, l'eau des tubes 6 les plus éloignés de l'échangeur 1 (ou vers l'extrémité arrière du dispositif d'échange 100) est plus froide que l'eau des tubes 6 les plus proches de l'échangeur 1 du fait de la direction de circulation des fumées.

L'extrémité inférieure des tubes 6 débouchent dans une boite à eau inférieure 8. La boite à eau inférieure 8 présente une ouverture reliée fluidiquement à un retour d'eau à basse température de la chaudière par un premier raccord 11.

Les extrémités supérieures des tubes 6 débouchent dans une boite à eau supérieure 12. La boite à eau supérieure 12 présente une première paroi latérale 5 et une seconde paroi latérale 7 opposée et parallèle à la première paroi 5. Une ouverture d'entrée 9 de la boite à eau supérieure 12 est ménagée dans la première paroi 5. Cette ouverture d'entrée 9 est reliée fluidiquement au retour d'eau à haute température RHT via un second raccord 13. Une ouverture de sortie 14 de la boite à eau supérieure 12 est ménagée dans la seconde paroi 7. L'ouverture de sortie 14 est reliée fluidiquement à l'entrée d'eau 2 du premier circuit d'échange de l'échangeur 1 via un troisième raccord 15. Les ouvertures d'entrée 9 et de sortie 14 sont agencées de sorte à être face à face, c'est-à-dire que les axes normaux aux ouvertures d'entrée 9 et de sortie 14 sont sensiblement confondus. Les dimensions de l'ouverture de sortie 14 sont plus importantes que celles de l'ouverture d'entrée 9. Ainsi le flux d'eau provenant de l'ouverture d'entrée 9 et se dirigeant vers l'ouverture de sortie 14 balaye la boite à eau 12 de part en part. Ce balayage peut alors entrainer l'eau provenant de l'extrémité supérieure des tubes 6, dans la même direction.

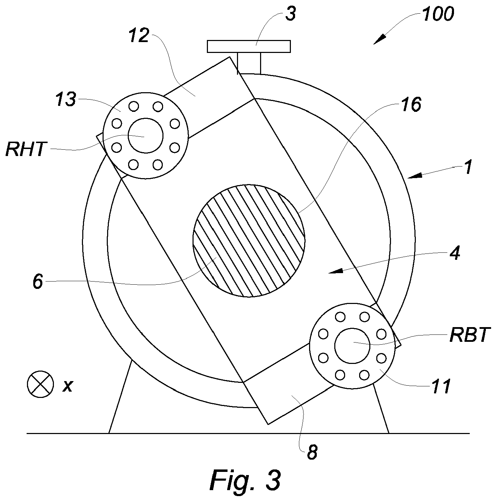

En référence à la figure 1, les tubes 6 sont sensiblement à la verticale, de sorte à favoriser la convection thermique créant des mouvements ascendant et descendant de l'eau. Selon une variante de réalisation illustrée aux figures 2 et 3, l'axe longitudinal de chaque tube 6 peut s'étendre avec une inclinaison comprise entre 15° et 90° par rapport à l'horizontale. Par ailleurs, l'axe longitudinal de chaque tube 6 s'étend perpendiculairement à la direction de l'écoulement des fumées (axe x). Cette configuration permet d'aligner le retour d'eau RHT avec l'ouverture d'entrée 9 et l'ouverture de sortie 14 sans gêner la sortie et la récupération des fumées de combustion par la buse 16. Ainsi, le nombre de pièce du condenseur 4 est réduit et la compacité du dispositif d'échange 100 est optimale.

Lors du fonctionnement de la chaudière par exemple, l'eau chaude sortant du départ d'eau 3 alimente deux circuits principaux : un premier circuit haute température, dont l'eau revient à la chaudière à haute température, par exemple 55°C, via le retour d'eau à haute température RHT, et un second circuit basse température, dont l'eau revient à la chaudière à environ à 30° C par le retour d'eau à RBT.

Le retour d'eau à basse température RBT permet alors de réaliser la seconde étape d'échange thermique en refroidissant et condensant la vapeur d'eau des fumées. En effet, l'eau à basse température pénètre dans le condenseur 4 par la boite à eau inférieure 8, circule dans un mouvement ascendant dans les tubes 6 en réalisant la seconde étape d'échange thermique avec les fumées. Puis l'eau traverse la boite à eau supérieure 12 pour revenir vers l'entrée d'eau 2 de l'échangeur 1 où elle sera réchauffée pour être à nouveau utilisée.

Lorsque le fonctionnement de la chaudière est limité à la production d'eau chaude sanitaire, en été notamment, il n'y a plus de débit d'irrigation dans le second circuit d'échange basse température. L'eau dans les tubes 6 situés en amont, dans le sens d'écoulement des fumées, s'échauffe en refroidissant les fumées ceci générant un mouvement ascendant, sous l'effet de la convection naturelle. Le balayage de la portion de la boite à eau 12 dans laquelle débouchent les extrémités supérieures des tubes 6 assure alors la récupération des calories de la circulation de l'eau provenant des tubes 6. Dans le même temps, l'eau provenant du RHT est entrainée dans un mouvement descendant dans les tubes 6 situés le plus en aval dans le sens d'écoulement des fumées, par compensation. Ces mouvements ascendants et descendants dans les tubes 6 permettent d'entretenir la circulation de l'eau dans le condenseur 4 de sorte à effectuer la seconde étape d'échange thermique. Le fonctionnement du condenseur 4 est alors optimisé car il récupère de l'énergie même en absence de retour RBT et les risques de surchauffe sont éliminés.

Etudions le cas d'une installation de chauffage composée d'une chaudière à condensation fonctionnant au gaz, d'un circuit de chauffage par radiateur et d'une production d'eau chaude sanitaire. La production d'eau chaude sanitaire nécessite généralement un régime de fonctionnement 80/60, c'est-à-dire une fourniture d'eau à 80°C, et un retour d'eau à haute température RHT à 60°C.

Dans ces conditions, les fumées issues de la combustion présentent une température comprise entre environ 130 et 140 °C à la sortie de l'échangeur 1 et à pleine charge, l'échangeur 1 thermique présente un rendement d'environ 94 %.

En absence de retour d'eau à basse température (circuit de chauffage à l'arrêt), et grâce au balayage de la boite à eau supérieure 12 du condenseur 4, l'eau contenue dans les tubes 6 est maintenue à environ 60-70°C, les fumées issues de la combustion sont alors refroidies à environ 70-80°C. Le rendement total comprenant le rendement de l'échangeur 1 et celui du condenseur 4 est alors d'environ 97%. Le gain de rendement lié à la récupération d'énergie du condenseur 4 et collecté grâce au balayage est donc d'environ 3 % .

Ainsi, la présente invention apporte une amélioration déterminante à l'état de la technique antérieure en proposant un dispositif d'échange 100 comprenant un condenseur 4 permettant de refroidir les fumées même en absence d'utilisation du circuit basse température par un agencement qui permet la mise en place d'un phénomène de convection naturelle efficace. Les risques de surchauffe du condenseur 4 sont alors éliminés et son fonctionnement est optimisé.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Chaudière à condensation comprenant au moins un retour d'eau à basse température (RBT), au moins un retour d'eau à haute température (RHT), et un dispositif d'échange (100) de chaleur comportant
• un échangeur (1) thermique, et
• un condenseur (4) comportant une boite à eau inférieure (8), une boite à eau supérieure (12), et des tubes (6) permettant la circulation de l'eau, chaque tube (6) comprenant :
- une extrémité inférieure débouchant dans la boite à eau inférieure (8), et
- une extrémité supérieure débouchant dans la boite à eau supérieure (12),
ladite chaudière étant **caractérisée en ce que**, la boite à eau supérieure (12) comportant une ouverture d'entrée (9) reliée fluidiquement au retour d'eau à haute température (RHT) et une ouverture de sortie (14) reliée fluidiquement à une entrée d'eau (2) de l'échangeur thermique (1) de la chaudière, la boite à eau inférieure (8) est reliée fluidiquement au retour d'eau à basse température (RBT).

2. Chaudière à condensation selon la revendication 1, **caractérisée en ce que** l'ouverture d'entrée (9) et l'ouverture de sortie (14) sont ménagées respectivement dans une première paroi (5) latérale et une seconde paroi (7) latérale de la boite à eau supérieure (12), la seconde paroi (7) latérale étant opposée et parallèle à la première paroi (5) latérale et l'ouverture d'entrée (9) et l'ouverture de sortie (14) étant arrangées de façon à ce que l'axe normal à l'ouverture d'entrée (9) est sensiblement confondu avec l'axe normal à l'ouverture de sortie (14).

3. Chaudière à condensation selon l'une des revendications 1 à 2, **caractérisée en ce que** l'ouverture de sortie (14) présente des dimensions plus importantes que celles de l'ouverture d'entrée (9).

4. Chaudière à condensation selon l'une des revendications 1 à 3, **caractérisée en ce que** l'axe longitudinal de chaque tube (6) s'étend avec une inclinaison comprise entre 15° et 90° par rapport à l'horizontale.

5. Chaudière à condensation selon l'une des revendications 1 à 4, **caractérisée en ce qu'**elle comprend un bruleur, configuré pour générer des fumées, le condenseur (4) étant agencé de sorte que les fumées s'écoulent dans une direction d'écoulement allant de l'échangeur (1) vers le condenseur (4).

6. Chaudière à condensation selon la revendication 5, **caractérisée en ce que** l'axe longitudinal de chaque tube (6) s'étend transversalement à la direction d'écoulement des fumées allant de l'échangeur (1) vers le condenseur (4).

7. Chaudière à condensation selon l'une des revendications 1 à 6, **caractérisée en ce que** l'entrée d'eau (2) de l'échangeur (1) thermique est disposée dans la partie supérieure de l'échangeur (1).

## Patentansprüche

1. Kondensationsheizkessel, umfassend mindestens eine Niedrigtemperatur-Wasserrückführung (RBT), mindestens eine Hochtemperatur-Wasserrückführung (RHT) und eine Wärmetauschvorrichtung (100), aufweisend
• einen Wärmetauscher (1), und
• einen Kondensator (4), aufweisend einen unteren Wasserbehälter (8), einen oberen Wasserbehälter (12) und Rohre (6), welche die Wasserzirkulation erlauben, wobei jedes Rohr (6) umfasst
- ein unteres Ende, das in den unteren Wasserbehälter (8) ausmündet, und
- eine oberes Ende, das in den oberen Wasserbehälter (12) ausmündet,
wobei der Heizkessel **dadurch gekennzeichnet** ist, wobei der obere Wasserbehälter (12) eine Eingangsöffnung (9) umfasst, die fluidisch mit der Hochtemperatur-Wasserrückführung (RHT) verbunden ist, und eine Ausgangsöffnung (14), die fluidisch mit einem Wassereinlass (2) des Wärmetauschers (1) des Heizkessels verbunden ist, dass der untere Wasserbehälter (8) fluidisch mit der Niedrigtemperatur-Wasserrückführung (RBT) verbunden ist.

2. Kondensationsheizkessel nach Anspruch 1, **dadurch gekennzeichnet, dass** die Eingangsöffnung (9) und die Ausgangsöffnung (14) jeweils in einer ersten Seitenwand (5) und in einer zweiten Seitenwand (7) des oberen Wasserbehälters (12) ausgebildet sind, wobei die zweite Seitenwand (7) zur ersten Seitenwand (5) gegenüberliegend und parallel ist und die Eingangsöffnung (9) und die Ausgangsöffnung (14) derart angeordnet sind, dass die normale Achse der Eingangsöffnung (9) etwa mit der normalen Achse der Ausgangsöffnung (14) zusammenfällt.

3. Kondensationsheizkessel nach einem der Ansprüche 1 bis 2, **dadurch gekennzeichnet, dass** die Ausgangsöffnung (14) größere Abmessungen als die Eingangsöffnung (9) aufweist.

4. Kondensationsheizkessel nach einem der Ansprüche 1 bis 3, **dadurch gekennzeichnet, dass** sich die Längsachse jedes Rohrs (6) mit einer Neigung zwischen 15° und 90° in Bezug auf die Horizontale erstreckt.

5. Kondensationsheizkessel nach einem der Ansprüche 1 bis 4, **dadurch gekennzeichnet, dass** er einen Brenner umfasst, der konfiguriert ist, um Rauchgase zu erzeugen, wobei der Kondensator (4) derart angeordnet ist, dass die Rauchgase in eine Richtung vom Wärmetauscher (1) zum Kondensator (4) strömen.

6. Kondensationsheizkessel nach Anspruch 5, **dadurch gekennzeichnet, dass** sich die Längsachse jedes Rohrs (6) transversal zur Strömungsrichtung der Rauchgase vom Wärmetauscher (1) zum Kondensator (4) erstreckt.

7. Kondensationsheizkessel nach einem der Ansprüche 1 bis 6, **dadurch gekennzeichnet, dass** der Wassereinlass (2) des Wärmetauschers (1) im oberen Teil des Wärmetauschers (1) angeordnet ist.

## Claims

1. A condensing boiler comprising at least one return of water at a low temperature (LTWR), at least one high temperature water return (HTWR), and a heat exchange device (100) including:
- a heat exchanger (1), and
- a condenser (4) including a lower water box (8), an upper water box (12), and tubes (6) allowing circulation of water,
each tube (6) comprising:
- a lower end opening into the lower water box (8), and
- an upper end opening into the upper water box (12), said boiler being **characterized in that**, the upper
water box (12) including an inlet aperture (9) fluidically connected to the high temperature water return (HTWR) and an outlet aperture (14) fluidically connected to a water inlet (2) of the heat exchanger (1) of the boiler, the lower water box (8) is fluidically connected to the low temperature water return (LTWR).

2. The condensing boiler according to claim 1, **characterized in that** the inlet aperture (9) and the outlet aperture (14) are respectively arranged in a first side wall (5) and a second side wall (7) of the upper water box (12), the second side wall (7) being opposite and parallel to the first side wall (5) and the inlet aperture (9) and the outlet aperture (14) being arranged so that the axis normal to the inlet aperture (9) substantially coincides with the axis normal to the outlet aperture (14).

3. The condensing boiler according to one of claims 1 to 2, **characterized in that** the outlet aperture opened the (14) has larger dimensions than those of the inlet aperture (9).

4. The condensing boiler according to one of claims 1 to 3, **characterized in that** the longitudinal axis of each tube (6) extends with a tilt comprised between 15° and 90° with respect to the horizontal.

5. The condensing boiler according to one of claims 1 to 4, **characterized in that** it comprises a burner, configured for generating fumes, the condenser (4) being arranged so that the fumes flow in a direction of flow from the exchanger (1) to the condenser (4).

6. The condensing boiler according to claim 5, **characterized in that** the longitudinal axis of each tube (6) extends transversely to the direction of flow of the fumes from the exchanger (1) to the condenser (4).

7. The condensing boiler according to one of claims 1 to 6, **characterized in that** the water inlet (2) of the heat exchanger (1) is positioned in the upper portion of the exchanger (1).
